# EUROPEAN PATENT APPLICATION

(11) **EP 3 716 104 A1**
(43) Date of publication of application: **30.09.2020**
(21) Application number: 19165469.8
(22) Date of filing: 27.03.2019
(51) Int. Cl.: G06F 17/27, G06F 17/22

(54) **EXTRACTING NAMED ENTITIES BASED USING DOCUMENT STRUCTURE**

(71) Applicant: Siemens Aktiengesellschaft, 80333 München (DE)
(72) Inventor: BUCKLEY, Mark, 81829 München (DE); LANGER, Stefan, 80797 München (DE)

(57) **Abstract**

The invention relates to a method for extracting at least one entity in at least one document (100), comprising the steps of Receiving the at least one document (100) as input data (S1); Identifying at least one block (10) in the at least one document (100) based on the structure or layout of the at least one document (S2); Determining at least one feature (12) associated with the identified at least one block (10), wherein the at least one feature relates to the content of the at least one block (10), structure of the at least one block (10) and/or other block (10) related information (S3); and Determining at least one score for the at least one block (10) based on the at least one block (10) and the associated at least one feature (12) using machine learning; wherein the at least one score is the likelihood that the at least one block (10) contains the at least one entity. Further, the invention relates to a corresponding computer program product and system.

## Description

### 1. Technical field

The present invention relates to a computer-implemented method for extracting at least one entity in at least one document. Further, the invention relates to a corresponding computer program product and system.

### 2. Prior art

Named-entity recognition (NER) (also known as entity identification, entity chunking and entity extraction) is well known from the prior art, according to which NER is a subtask or process of information extraction. Information extraction (also known as IE) is the task of automatically extracting structured information from machine-readable documents, e.g. processing texts by means of natural language processing (NLP).

NER identifies and classifies named-entities in the machine-readable documents, such as PDF or Word documents. Examples of named entities include person names, company names, organizations, locations, places, medical codes, time expressions, quantities, monetary values, percentages, etc. NER is an important task for many natural language applications since the named entities which a machine-readable document refers to is an important metadata of that document.

Usually, known approaches extract named entities by examining the context or text surrounding the respective named entities, especially the words and phrases. The surrounding context or text can be referred to as context area. For example, it is assumed or likely that a company name, such as "Siemens", is followed by the type or form of the company, especially its abbreviation, such as "AG" ("Siemens AG"). Thereby, the company name "Siemens" is the named entity and the type or form "AG" is the context area. The named entities are e.g. detected via regular expressions according to prior art. A regular expression is a special text string for describing a search pattern. Regular expressions are well known from the prior art. Stanford CoreNLP and SpaCy are known open source packages for natural language processing which make use of such patters.

Thus, regular expressions rely on known patterns which indicate a high likelihood of the presence of the named entities in the context area. The patterns have to be defined and tested. A disadvantage is that the definition, testing and pattern matching is error prone and time-consuming.

Further, the known approaches are only applicable on unstructured documents without taking into account the document structure, solely or exclusively containing flowing text. Most of the machine-readable documents today, however, are semi-structured or unstructured documents. The semi-structured documents include not just flowing text, but in addition lists, tables, figures, information blocks and/or headers. Thus, the named entities are not necessarily embedded in the context area.

It is therefore an objective of the invention to provide a method for extracting at least one entity in at least one document, which is applicable on any kind of machine-readable document, efficient and reliable.

### 3. Summary of the invention

This problem is according to one aspect of the invention solved by a computer-implemented method for extracting at least one entity in at least one document, the method comprising the steps of:
a. Receiving the at least one document as input data;
b. Identifying at least one block in the at least one document based on the structure or layout of the at least one document;
c. Determining at least one feature associated with the identified at least one block, wherein the at least one feature relates to the content of the at least one block, structure of the at least one block and/or other block related information; and
d. Determining at least one score for the at least one block based on the at least one block and the associated at least one feature using machine learning; wherein
   the at least one score is the likelihood that the at least one block contains the at least one entity.

Accordingly, the invention is directed to a method for extracting at least one entity in at least one document. The entity is the above-mentioned named entity or any other real-world entity. The document is in particular a machine-readable document, such as PDF or Word document which can be processed by any computing unit in an efficient manner.

In a first step, input data is received. The input data comprises the document, in particular a set of documents.

In a second step, the document is processed or analyzed with regard to the named entity. One or more blocks are identified in the document or extracted from the document. The block can be referred to as structural block or layout block. The block can be defined as a contiguous 2D area of the visual representation of the document which is separated from the other blocks. Any separator can be used for the separation of blocks, see further below.

In a third step, one or more features are determined. The features are associated with the identified respective blocks. The feature is indicative of whether the block contains the entity or not. Exemplary features are the text content of the block, location of the block and size of the block. Distinct approaches can be used for the extraction of the features depending on the feature type. For example, the standard method n-gram extraction can be applied for the extraction of textual features.

In a last step, the score for the respective block is determined based on the at least one block and the associated feature using machine learning. In case that the document comprises a plurality of blocks, for each block of the plurality of blocks a respective score is computed. In other words, a score is assigned to each block. Thereby, the score is the likelihood.

Contrary to prior art, the method is applicable on any kind of documents, including the semi-structured documents.

Further, contrary to prior art, the method considers structural/layout features and textual/content-related features for analyzing the semi-structured documents and extracting the entities. The features are assigned to the blocks and fed as further input into the machine-learning classifier. Thus, the decision about the likelihood of the presence or occurrence of the entities can be improved and the resulting score is more reliable.

Hence, the method according to the invention ensures an improved efficiency and accuracy in the extraction of entities from any kind of documents.

Moreover, the processed data of the method according to the invention provides a basis for more efficient NER processes since the subsequent analysis can be built on the output data of the method. In other words, NER, other applications or algorithms can focus on the identified blocks which are most likely to contain entities.

In one aspect the at least one document is structured, unstructured or semi-structured. Accordingly, the document can be any kind of document, including semi-structured documents which comprise text as well as figures, lists etc. Thus, the method can be applied in a flexible manner according to the specific application case, underlying technical system or user requirements.

In a further aspect identifying the at least one block in the at least one document based on the structure of the at least one document further comprises
separating the at least one document into the at least one block by a separator, wherein the separator is in particular a whitespace, a ruler line or a page break.

In a further aspect the separation uses pdf2xml or pdfminer for PDF documents.

Accordingly, any kind of separator and separating algorithm can be used for separating the document into its blocks. Thus, the separator and/or separating algorithm can be selected in a flexible manner according to the input document and any other requirements.

In a further aspect the machine learning is a learning-based approach selected from the group, comprising neural network, support vector machine, logistic regression, random forest. Accordingly, any learning-based approach can be used. Thus, the algorithm can be selected in a flexible manner according to the specific application case, underlying technical system or user requirements.

In a further aspect the method further comprises the step of Outputting the at least one block, the at least one entity, the at least one feature, the at least one score and/or any other output information as output data.
Accordingly, the output data or data used in the intermediate method steps can be further processed, including outputting, storing and/or further analyzing the output data. As mentioned further above, the output data can be used as input for any kind of subsequent algorithm, including NER or NLP applications. This way, the subsequent analysis is also improved.

A further aspect of the invention is a computer program product directly loadable into an internal memory of a computer, comprising software code portions for performing the steps according to any one of the preceding claims when said computer program product is running on a computer.

A further aspect of the invention is a system for extracting at least one entity in at least one document, comprising:
a. Receiving unit for receiving the at least one document as input data;
b. Identification unit for identifying at least one block in the at least one document based on the structure or layout of the at least one document;
c. Determining unit for determining at least one feature associated with the at least one block, wherein the at least one feature relates to the content of the at least one block, structure of the at least one block and/or other block related information; and
d. Classifier for determining at least one score for the at least one block based on the at least one block and the associated at least one feature using machine learning; wherein
   the at least one score is the likelihood that the at least one block contains the at least one entity.

The classification model is untrained and used in the training process, whereas the classifier is used after training in the running system or method according to the invention.

### 4. Short description of the drawings

In the following detailed description, presently preferred embodiments of the invention are further described with reference to the following figures:
- Fig. 1: illustrates an exemplary document with a plurality of identified blocks comprising company names according to an embodiment of the present invention.
- Fig. 2: illustrates a flowchart of the method according to the invention.

### 5. Detailed description of preferred embodiments

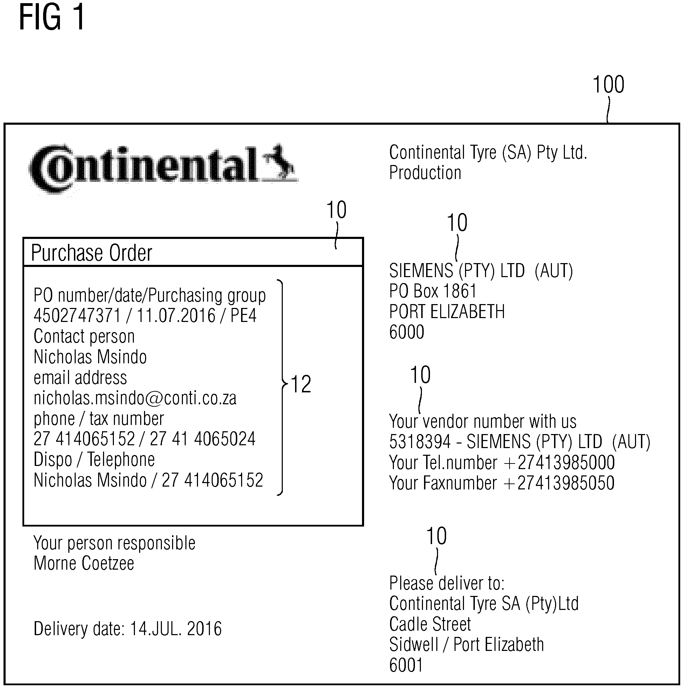

Figure 1 shows an exemplary document 100 as input data. The illustrated document is a semi-structured document and is a purchase order, which can be split into a plurality of blocks 10. The left and right parts of the document 100 each comprise e.g. several blocks 10.

For example, the left part of the document 100 comprises a block 10 with the expression "Continental", a further block 10 starting with the expression "Purchase Order" and further blocks 10. The right part of the document 100 comprises a block 10 starting with the expression "Continental Tyre", a further block starting with the expression "SIEMENS", a further block starting with the expression "Your vendor number with us" and a further block starting with the expression "Please deliver to:". Alternatively, the illustrated document can be split into any other blocks and any other number of blocks.

One or more features 12 are assigned to each block 10, such as e.g. the text content as one feature which is already illustrated in the document 100. The feature can be referred to as textual feature. The block 10 starting with the expression "SIEMENS" comprises the respective following text content:
"SIEMENS (PTY) LTD (AUT)
PO Box 1861
PORT ELIZABETH
6000"
The text content is only exemplary.

The company name as exemplary named entity is comprised in several blocks of the plurality of blocks, namely "Siemens" and "Continental".

The document serves as input data for the method according to the invention and is received in a first step S1.

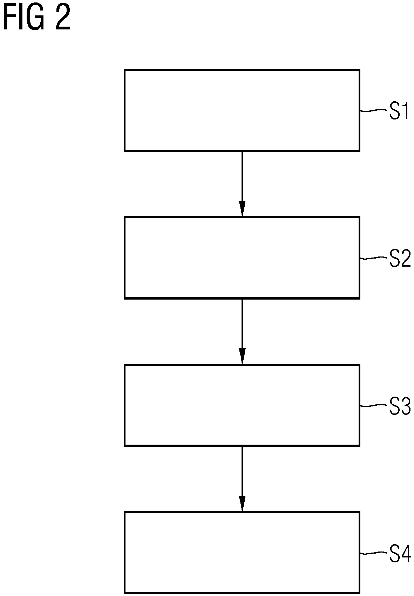

Fig. 2 illustrates a flowchart of the method according to the invention with the method steps S1 to S4. The method steps S2 to S4 will be explained in the following in more detail.

### Identification or extraction of blocks S2

Distinct methods can extract the blocks 10 which the document 100 contains. For example, pdf2xml can be used for PDF documents. Alternatively, or additionally, any other methods can be applied.

### Determination of the features for the blocks S3

One or more features 12 are determined or computed for each block 10.

For example, the above-mentioned text content as textual feature can be extracted. Therefore, the text content is converted into a sequence of individual tokens, wherein tokens correspond to words. Distinct methods of stopword removal, in which auxiliary words are removed, and tokenisation, in which the text is split into words at whitespace and punctuation boundaries, can be used. Then, the method n-gram extraction is used, in which each subsequence whose length is within a configurable range is computed. A typical range is 1-3. Then, the frequency of each n-gram is computed, from which the tf-idf score of each n-gram is computed. Tf-idf is a weighting function from the NLP. The n-grams and their tf-idf weights are the textual features and their feature values, respectively.

Further exemplary features are listed in the following, which can be determined in step S3:
- Number of the page, the block 10 appears on
- Block 10 location (x/y coordinates)
- Block 10 height and width
- Textual features of the block 10
- Neighboring blocks and respective information

The neighboring blocks on the left, right, above and below the block 10 can be determined using the x/y coordinates of the identified block 10. The textual features of each neighboring block are determined as described above S3, with the difference that each n-gram is prefixed with the string "LEFT_", "RIGHT_", "ABOVE_" or "BELOW_", respectively, depending on its spatial relation to the identified block 10. The resulting n-grams, after tf-idf weighting, are added to the n-gram list of the identified block 10. This way, the features of a block 10 include the direction-labeled textual features of its neighboring blocks. The same word or phrase can be handled differently depending on whether it appears on the left or right of the identified block 10.

Further, the distances of the block 10 to the neighboring blocks can be determined from their x/y coordinates.
The size of the block 10 and the distance can be standardized to zero mean and unit variance.

### Determining the score for the block S4

A classifier, which was
previously trained according to the training process described further below, is then used to determine for each block 10 in the document 100, the likelihood that it contains the entity.
The classifier can be equally referred to as machine-learning classifier or trained classification model.

Training process in detail:
First, the method steps S1 to S3 are performed, as depicted and explained according to Figure 2.

Then, each block 10 is labelled either positive or negative, depending on whether the block 10 contains the entity (positive label) or not (negative label). The labels can be used from the document 100 itself. Alternatively, a list of entities which are expected to occur in the document 100 can be received as further input data besides the document. A block 10 is labelled as positive, if the text content of the block contains any one of the entities of the list of entities, otherwise the block is labelled as negative.
The entity is removed from the features 12 of the block 10, if the block 10 does not contain an entity.
Thus, each block 10 is assigned to either a positive or a negative label after the labelling as result.

The entities can be removed from the text content of the block and from the features of the block. This way, the classification model does not learn the entity names themselves, but rather it is forced to consider the signals from the surroundings of the entity.

The features and labels are passed to a suitable supervised classification algorithm which trains the corresponding classification model. Thereby, it is important that the algorithm is able to correctly handle differently typed features, such as continuously and categorically valued features. Further, the algorithm should be able to assign, via a suitable prediction function, not only a binary prediction to each data point, but also a continuous likelihood value for each class.
One such example, which is used in an embodiment of this invention, is a random forest classifier. Alternatively, other logistic regression or support vector machines can be used.

## Claims

1. Method for extracting at least one entity in at least one document (100), comprising the steps of:
a. Receiving the at least one document (100) as input data (S1);
b. Identifying at least one block (10) in the at least one document (100) based on the structure or layout of the at least one document (S2);
c. Determining at least one feature (12) associated with the identified at least one block (10), wherein the at least one feature relates to the content of the at least one block (10), structure of the at least one block (10) and/or other block (10) related information (S3); and
d. Determining at least one score for the at least one block (10) based on the at least one block (10) and the associated at least one feature (12) using machine learning; wherein
the at least one score is the likelihood that the at least one block (10) contains the at least one entity (S4).

2. Method according to claim 1, wherein the at least one document (100) is structured, unstructured or semi-structured.

3. Method according to claim 1 or claim 2, wherein Identifying the at least one block (10) in the at least one document (100) based on the structure or layout of the at least one document (S2) further comprises
Separating the at least one document (100) into the at least one block (10) by a separator, wherein the separator is in particular a whitespace, a ruler line or a page break.

4. Method according to claim 3,
wherein the separation uses pdf2xml or pdfminer for PDF documents.

5. Method according to any of the preceding claims, wherein the machine learning is a learning-based approach selected from the group, comprising
neural network, support vector machine, logistic regression and random forest, in particular a trained learning-based approach.

6. Method according to any of the preceding claims, wherein the method further comprises the step of
Outputting the at least one block (10), the at least one entity, the at least one feature (12), the at least one score and/or any other output information as output data.

7. A computer program product directly loadable into an internal memory of a computer, comprising software code portions for performing the steps according to any one of the preceding claims when said computer program product is running on a computer.

8. System for extracting at least one entity in at least one document (100), comprising:
a. Receiving unit for receiving the at least one document (100) as input data (S1);
b. Identification unit for identifying at least one block (10) in the at least one document (100) based on the structure or layout of the at least one document (S2);
c. Determining unit for determining at least one feature (12) associated with the at least one block (10), wherein the at least one feature (12) relates to the content of the at least one block (10), structure of the at least one block (10) and/or other block related information (S3); and
d. Classifier for determining at least one score for the at least one block (10) based on the at least one block (10) and the associated at least one feature (12) using machine learning (S4); wherein
the at least one score is the likelihood that the at least one block (10) contains the at least one entity.

9. System according to claim 8, wherein the classifier is a random forest classifier or any other machine learning classifier.
